(19) Europäisches Patentamt
European Patent Office
Office européen des brevets

(11) **EP 3 357 794 B1**

(12) **FASCICULE DE BREVET EUROPEEN**

(45) Date de publication et mention
de la délivrance du brevet:
**13.05.2020   Bulletin 2020/20**

(51) Int Cl.:
***B62D 15/02*** *(2006.01)*      ***G01C 21/34*** *(2006.01)*
***B60T 8/1755*** *(2006.01)*      ***B60T 8/88*** *(2006.01)*

(21) Numéro de dépôt: **18152561.9**

(22) Date de dépôt: **19.01.2018**

(54) **PROCÉDÉ ET DISPOSITIF D'AIDE À LA CONDUITE POUR VÉHICULE AUTOMOBILE**

ASSISTENZVERFAHREN UND -VORRICHTUNG ZUM LENKEN EINES KRAFTFAHRZEUGS

DRIVING ASSISTANCE METHOD AND DEVICE FOR MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **01.02.2017   FR 1750826**

(43) Date de publication de la demande:
**08.08.2018   Bulletin 2018/32**

(73) Titulaire: **RENAULT s.a.s.**
**92100 Boulogne-Billancourt (FR)**

(72) Inventeurs:
• **HADDA, ALAIN**
**78310 MAUREPAS (FR)**
• **DO, ANH LAM**
**92370 CHAVILLE (FR)**

(56) Documents cités:
**US-A- 5 979 581**      **US-A1- 2007 055 431**
**US-A1- 2015 185 734**

**Description**

La présente invention concerne un dispositif et un procédé d'aide à la conduite. Elle concerne plus particulièrement un procédé d'élaboration d'une loi de commande permettant de maintenir un véhicule dans une voie de circulation.

Les véhicules automobiles sont fréquemment équipés de dispositifs d'aide à la conduite. Certains de ces dispositifs sont conçus de telle sorte qu'ils permettent d'assister le conducteur pour maintenir le véhicule dans la voie. Ils agissent sur la direction du véhicule en modifiant l'angle de braquage des roues directrices du véhicule. La détermination de l'angle de braquage adaptée à la situation du véhicule repose sur un algorithme de commande contenu dans le dispositif d'aide à la conduite. Il met en oeuvre une loi de commande et utilise un modèle dynamique du véhicule. La loi de commande peut être du type aide au maintient dans la voie, LKA (en anglais Lane Keeping Assist).

L'angle de braquage ainsi obtenu doit être de valeur proche de celui que serait tenté de donner un être humain si c'était lui qui l'appliquait. Cet angle de braquage est qualifié d'angle de braquage humanoïde.

L'amplitude et la variation de l'angle de braquage sont limitées.

L'obtention d'un angle de braquage humanoïde de référence requiert un modèle dynamique précis du véhicule et nécessite le respect de paramètres liés aux conditions initiales de départ et aux caractéristiques dynamiques du véhicule.

Les caractéristiques dynamiques du véhicule comprennent l'angle de dérive, la vitesse de lacet, l'angle de cap, la position latérale et l'intégrale de la position latérale entre l'axe du véhicule et la tangente à la trajectoire en avant du véhicule.

Dans ce qui suit l'opérateur $\dot{x}$ désigne le dérivé de $x$.

Le modèle de véhicule utilisé dans l'état de la technique est connu sous le nom de modèle bicyclette et se présente sous la forme suivante :

$$\begin{pmatrix} \dot{\beta} \\ \dot{r} \\ \dot{\psi}_L \\ \dot{y}_L \end{pmatrix} = \begin{bmatrix} -\dfrac{C_f + C_r}{mV} & -1 + \dfrac{C_r l_r - C_f l_f}{mV^2} & 0 & 0 \\ -\dfrac{C_f l_f - C_r l_r}{J} & -\dfrac{C_r l_r^2 + C_f l_f^2}{JV} & 0 & 0 \\ 0 & 1 & 0 & 0 \\ V & l_s & V & 0 \end{bmatrix} \begin{pmatrix} \beta \\ r \\ \psi_L \\ y_L \end{pmatrix} + \begin{bmatrix} 0 \\ 0 \\ -V \\ 0 \end{bmatrix} \rho_{ref} + \begin{bmatrix} \dfrac{C_f}{mV} \\ \dfrac{C_f l_f}{J} \\ 0 \\ 0 \end{bmatrix} \delta$$

$$(\text{équation 1})$$

où $\beta$ est l'angle de dérive, r est la vitesse de lacet, $\Psi_L$ est l'angle relatif de cap entre l'axe du véhicule et la tangente à la trajectoire de référence, $y_L$ est l'écart latéral entre le centre de gravité du véhicule et le centre de la voie du véhicule et la tangente à la trajectoire en avant du véhicule, $\rho_{ref}$ est la courbure de la route, $\delta$ est l'angle de braquage des roues avant. Les paramètres considérés dans le modèle sont les suivants : $C_f$ est la rigidité de dérive des roues avant, $C_r$ est la rigidité de dérive des roues arrière, $l_f$ est la distance du centre de gravité à l'essieu avant, $l_r$ est la distance du centre de gravité à l'essieu arrière, m est la masse totale du véhicule, V est la vitesse du véhicule, J est l'inertie du véhicule autour d'un axe vertical passant par son centre de gravité et $l_s$ est la distance de visée. Cependant ce modèle n'intègre pas un modèle de direction électrique assistée de braquage des roues avant.

Dans le but de calculer l'angle de braquage humanoïde de référence, on cherche à obtenir un modèle dynamique précis du véhicule afin d'élaborer une loi de commande du type LKA satisfaisant les critères d'angle de braquage humanoïde.

Le document EP1726513 propose un système d'assistance de véhicule qui applique un couple de direction au véhicule lors de situations à risque de sortie involontaire de la voie, de collision latérale lors des manoeuvres de changement de voie ou de distraction du conducteur en intervenant sur certains systèmes embarqués ou en fournissant des signaux d'avertissement appropriés. Il ne permet pas de définir un angle de braquage humanoïde.

On pourra également se référer au document US6,493,619 qui décrit un dispositif et un procédé d'assistance de maintien d'un véhicule automobile dans une voie en utilisant un moteur électrique piloté en courant pendant une phase de fonctionnement en direction automatique. Le dispositif identifie l'instant où le conducteur reprend le contrôle du véhicule et désactive la direction automatique du véhicule. La définition d'un angle de braquage humanoïde n'est pas l'objet de ce document.

Le document US2011/0015805 décrit un système d'assistance qui établit la trajectoire du véhicule en fonction de la demande du conducteur. Il ne permet pas de définir un angle de braquage humanoïde.

Le document US2016/0059856 présente un dispositif permettant de centrer un véhicule sur une voie délimitée par des délimiteurs placés à gauche et à droite du véhicule. Le dispositif de commande est mis en oeuvre pour que le véhicule maintienne une trajectoire centrée sur la ligne médiane de la voie délimitée par les délimiteurs. Le dispositif est automatiquement activé lorsque la vitesse du véhicule est au-dessus d'un premier niveau de vitesse. Le dispositif est désactivé automatiquement lorsque la vitesse du véhicule est au-dessous d'un deuxième niveau de vitesse. Il ne permet pas de définir un angle de braquage humanoïde.

Le document US5979581 A est considéré comme l'état de l'art antérieur le plus proche selon le préambule des revendications 1 et 5 et divulgue un appareil pour maintien automatique dans la voie dans lequel la position du centre de la voie et la courbure de la route sont utilisées pour déterminer un signal d'erreur latérale pour un contrôle en contre-réaction, et la courbure de la route est utilisé pour un contrôle prédictif, les deux étant combinés pour produire un signal de contrôle de braquage du véhicule.

Bien que permettant de définir un angle de braquage, ces méthodes ne permettent pas de déterminer un angle de braquage humanoïde.

Le but de l'invention est de pallier ces inconvénients.

Au vu de ce qui précède, l'invention propose un procédé d'aide à la conduite pour véhicule automobile dans lequel on calcule un angle de braquage des roues directrices du véhicule de manière à maintenir le véhicule dans une voie de circulation.

Selon une caractéristique du procédé, l'angle de braquage est calculé à partir d'un modèle dynamique du véhicule et à partir de paramètres portant sur le comportement du véhicule et respectant des critères de sécurité et de confort du conducteur.

Par exemple, les critères de confort et de sécurité du conducteur englobent la limitation de la vitesse latérale du véhicule, la limitation de l'accélération latérale et de la dérivée de la vitesse de lacet, la convergence robuste de l'écart latéral vers une erreur latérale nulle, et impliquent que les vitesses minimale et maximale de convergence du système en boucle fermée soient bornées.

Selon une autre caractéristique du procédé, la détermination d'un angle de braquage est réalisé à partir de critères d'optimisation convexe sous contraintes LMI (Linear Matrix Inequalities).

De préférence, le modèle dynamique du véhicule comprend un modèle bicyclette, un modèle de direction assistée du véhicule, et l'intégrale de la position latérale.

Selon une autre caractéristique du procédé, les critères de sécurité du conducteur comprennent un critère imposant qu'en régime permanent l'erreur de l'écart de la position latérale entre le centre de gravité du véhicule et le centre de la voie converge vers une erreur latérale nulle, et un critère imposant que pour un ensemble de conditions initiales prédéfinies la valeur de cet écart est inférieure à une valeur fixe prédéfinie.

Selon l'invention, les critères de confort du conducteur comprennent un critère qui impose que la vitesse latérale du véhicule soit bornée par une valeur garantissant un niveau acceptable de confort perçu par le conducteur, un second critère qui impose que l'accélération latérale et la dérivée de la vitesse de lacet soient bornées, et un troisième critère qui impose que les vitesses minimale et maximale de convergence en boucle fermée soient bornées.

L'invention a également pour objet un dispositif d'aide à la conduite pour véhicule automobile comprenant des moyens de détermination d'un angle de braquage de roues directrices du véhicule de manière à maintenir le véhicule dans la voie de circulation.

Selon une caractéristique du dispositif, les moyens de déterminations comportent des moyens de calcul d'angle de braquage à partir d'un modèle dynamique du véhicule et à partir de paramètres portant sur le comportement du véhicule et respectant des critères de sécurité et de confort du conducteur.

Selon une autre caractéristique du dispositif, les moyens de calcul d'angle de braquage des roues comportent un modèle dynamique du véhicule comprenant un modèle bicyclette, un modèle de la direction assistée du véhicule et l'intégrale de la position latérale entre l'axe du véhicule et la tangente à la trajectoire de référence.

Avantageusement les critères de sécurité du conducteur comprennent un critère imposant qu'en régime permanent l'erreur de l'écart de la position latérale entre le centre de gravité du véhicule et le centre de la voie converge vers une erreur latérale nulle, et un critère imposant que pour un ensemble de conditions initiales prédéfinies, la valeur de cet écart est inférieure à une valeur fixe prédéfinie.

Selon une autre caractéristique du dispositif de l'invention, les critères de confort du conducteur comprennent un critère qui impose que la vitesse latérale du véhicule soit bornée par une valeur garantissant un niveau acceptable de confort perçu par le conducteur, un second critère qui impose que l'accélération latérale et la dérivée de la vitesse de lacet soient bornées, et un troisième critère qui impose que les vitesses minimale et maximale de convergence en boucle fermée soient bornées.

Enfin, l'invention a également pour objet un véhicule automobile comprenant un dispositif d'aide au maintien dans la voie selon l'une des caractéristiques précédentes.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 montre l'architecture générale d'une loi de commande permettant la mise en oeuvre d'un procédé d'aide à la conduite selon l'invention;
- la figure 2 est un schéma illustrant le placement des pôles de la loi de commande; et
- la figure 3 montre la trajectoire d'un véhicule obtenue suite à l'activation d'un dispositif d'aide à la conduite conforme à l'invention.

Le procédé d'aide à la conduite selon l'invention est destiné à calculer un angle de braquage humanoïde destiné à être appliqué aux roues directrices du véhicule, de manière à guider le véhicule selon une trajectoire permettant de maintenir le véhicule dans une voie de circulation.

Par exemple, un tel procédé peut être mis en oeuvre au moyen d'un calculateur embarqué qui intègre des moyens matériels et logiciels de calcul d'angle de braquage.

Comme cela sera décrit en détail par la suite, de tels moyens de calcul sont par exemple destinés à mettre en oeuvre une loi de commande en mettant en oeuvre un modèle dynamique du véhicule et à partir de paramètres portant sur le comportement du véhicule.

Le modèle dynamique de véhicule intègre par exemple un modèle bicyclette, un modèle dynamique de la direction électrique assistée et l'intégrale de la position latérale.

Dans ce qui suit, $\int y_L$ représente l'intégrale de la position latérale.

Le modèle dynamique de braquage des roues directrices ici les roues avant, permet de modéliser les variations de l'angle de braquage des roues avant en régime transitoire. Ce modèle est représenté par l'équation suivante :

$$\delta = \frac{\omega^2}{s^2 + 2\xi\omega + \omega^2}\delta_{ref} \qquad (\text{équation } 2)$$

où $\delta$ est l'angle de braquage réalisé des roues avant et $\delta_{ref}$ est l'angle de braquage de référence des roues avant.

La représentation d'état du modèle dynamique d'un véhicule automobile intégrant le modèle de bicyclette, le modèle dynamique de braquage des roues et l'intégrale de position latérale est décrite par l'équation suivante :

$$\dot{x} = Ax + B_u u + B_w w \qquad (\text{équation } 3)$$

où

$$\dot{x} = \begin{pmatrix} \dot{\beta} \\ \dot{r} \\ \dot{\psi}_L \\ \dot{y}_L \\ y_L \\ \ddot{\delta} \\ \dot{\delta} \end{pmatrix} \qquad (\text{équation } 4)$$

$$x = \begin{pmatrix} \beta \\ r \\ \psi_L \\ y_L \\ \int y_L \\ \dot{\delta} \\ \delta \end{pmatrix} \qquad \text{(équation 5)}$$

$$u = \delta_{ref} \qquad \text{(équation 6)}$$

$$w = \rho_{ref} \qquad \text{(équation 7)}$$

$$A = \begin{bmatrix} -\dfrac{C_f + C_r}{mV} & 1 + \dfrac{C_r l_r - C_f l_f}{mV^2} & 0 & 0 & 0 & 0 & \dfrac{C_f}{mV} \\ -\dfrac{C_f l_f - C_r l_r}{J} & -\dfrac{C_r l_r^2 + C_f l_f^2}{JV} & 0 & 0 & 0 & 0 & \dfrac{C_f l_f}{J} \\ 0 & 1 & 0 & 0 & 0 & 0 & 0 \\ V & l_s & 0 & 0 & 0 & 0 & 0 \\ 0 & 0 & 0 & 1 & 0 & 0 & 0 \\ 0 & 0 & 0 & 0 & 0 & -2\xi\omega & -\omega^2 \\ 0 & 0 & 0 & 0 & 0 & 1 & 0 \end{bmatrix} \text{(équation 8)}$$

$$B_u = \begin{bmatrix} \dfrac{C_f}{mV} \\ \dfrac{C_f l_f}{J} \\ 0 \\ 0 \\ 0 \\ \omega^2 \\ 0 \end{bmatrix} \qquad \text{(équation 9)}$$

$$B_w = \begin{bmatrix} 0 \\ 0 \\ -V \\ 0 \\ 0 \\ 0 \\ 0 \end{bmatrix} \qquad (\text{équation } 10)$$

et où $\beta$ est l'angle de dérive, r est la vitesse de lacet, $\Psi_L$ est l'angle relatif de cap entre l'axe du véhicule et la tangente à la trajectoire de référence, $y_L$ est l'écart latéral entre le centre de gravité du véhicule et le centre de la voie, $\rho_{ref}$ est la courbure de la route.

Les paramètres considérés dans le modèle sont les suivants :

- $C_f$ est la rigidité de dérive des roues avant;
- $C_r$ est la rigidité de dérive des roues arrière;
- $l_f$ est la distance de centre de gravité à l'essieu avant;
- $l_r$ est la distance de centre de gravité à l'essieu arrière;
- m est la masse totale du véhicule;
- V est la vitesse du véhicule;
- J est l'inertie du véhicule autour d'un axe vertical passant par son centre de gravité; et
- $l_S$ est la distance de visée.

Dans ce qui suit, l'opérateur $\dot{x}$ désigne la dérivé première de $x$, et l'opérateur $\ddot{x}$ désigne la dérivé seconde de $x$.

Les paramètres portant sur le comportement du véhicule sont déterminés de manière à respecter des critères de sécurité et de confort.

Les contraintes de confort et de sécurité d'un angle de braquage humanoïde sont également modélisées par des équations.

Il faut que pour un ensemble de conditions initiales prédéfinies du système, l'écart latéral maximal du véhicule soit inférieur à une valeur fixe établie en avance. L'équation suivante traduit cette contrainte :

$$\left| y_L \right| < \Delta_{max} \qquad (\text{équation } 11)$$

où $\Delta max$ est la valeur de déviation maximale autorisée, fixée en fonction de la largeur de la route.

Cette exigence garantit le non dépassement des limites de la voie une fois la commande LKA activée. La sécurité du conducteur est alors assurée.

Il faut également que la vitesse latérale du véhicule soit bornée. L'équation suivante traduit cette contrainte :

$$\left| \dot{y}L \right| < \nabla_{max} \qquad (\text{équation } 12)$$

où $\nabla max$ est la valeur du seuil de variation maximale de la vitesse latérale du véhicule garantissant un niveau acceptable de confort perçu par le conducteur.

Une contrainte supplémentaire pour assurer le confort du conducteur impose que l'accélération latérale et la dérivée de la vitesse de lacet soient bornées.

Il faut également que l'écart latéral converge vers une erreur latérale nulle d'une manière robuste. Cette contrainte est représentée pas l'équation suivante :

$$y_L \approx 0 \; en \; fin \; de \; la \; régulation \; du \; LKA \quad (\text{équation } 13)$$

Enfin, il faut que les vitesses minimale et maximale de convergence du système en boucle fermée soient bornées. Cette contrainte garantit que l'angle de braquage de consigne calculé par la loi de commande ne varie pas d'une manière considérée comme brusque et gênante pour le conducteur. Cette contrainte impose de choisir le placement des pôles de la loi de commande.

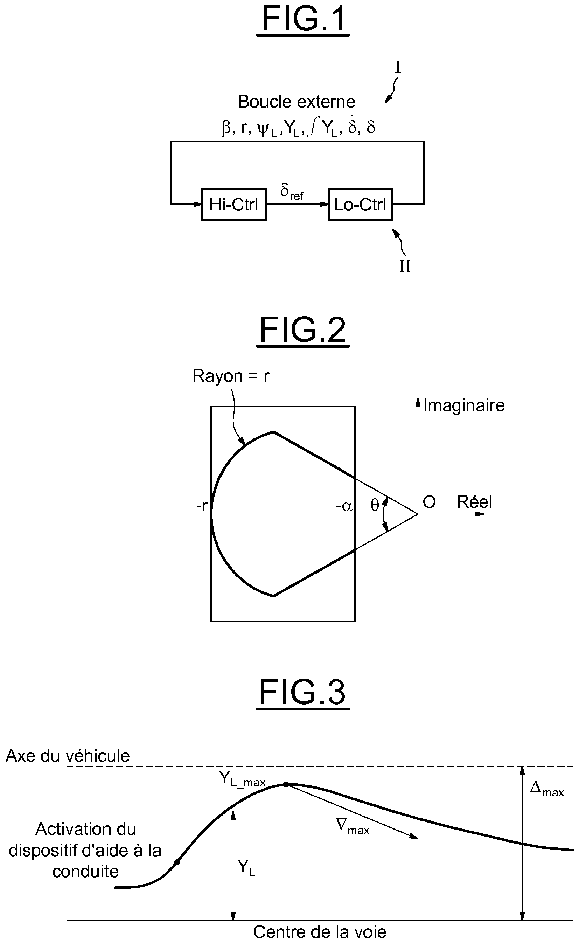

On se réfèrera à présent à la figure 1 qui représente l'architecture de la loi de commande qui permet de déterminer l'angle de braquage humanoïde en mettant en oeuvre un modèle dynamique de véhicule qui intègre un modèle bicyclette, un modèle dynamique de la direction électrique assistée et l'intégrale de la position latérale et qui respecte les critères de sécurité et de confort indiqués précédemment.

Les variables ont la même signification que celles qui ont été exposées précédemment.

La loi de commande qui est utilisée par les moyens de calcul pour calculer un angle de braquage humanoïde utilise deux boucles interconnectées.

Une première boucle I, appelée boucle externe, utilise un correcteur haut niveau (Hi-Ctrl) et une seconde boucle II appelée boucle interne utilise un correcteur de bas niveau (Lo-Ctrl). La boucle externe (Hi-Ctrl) calcule l'angle de braquage des roues avant de référence $\delta_{ref}$. La boucle interne (Lo-Ctrl) calcule le couple nécessaire à appliquer sur la direction du véhicule automobile pour assurer le suivi de l'angle de braquage de référence $\delta_{ref}$.

Dans ce qui suit est présentée une méthode de conception de la loi de commande du correcteur de haut niveau (Hi-Ctrl) basée sur la génération optimisée des gains de correcteur. La méthode repose sur l'utilisation de critères d'optimisation convexe sous contraintes LMI (en anglais Linear Matrix Inequalities) pour satisfaire aux contraintes de confort et de sécurité d'un angle de braquage des roues humanoïde.

Dans ce qui suit, dans le but de simplifier les équations, une matrice de la forme $\begin{bmatrix} X & Y \\ Y^T & W \end{bmatrix}$ est écrite sous la forme $\begin{bmatrix} X & Y \\ * & W \end{bmatrix}$.

La loi de commande est établie pour les cas de déviation du véhicule sur une voie horizontale. Pour ces cas-là, la courbure de la route est nulle :

$$\rho_{ref} = 0 \qquad (\text{équation } 14)$$

Dans l'hypothèse d'une courbure nulle, l'équation 3 devient :

$$\dot{x} = Ax + B_u u \qquad (\text{équation } 15)$$

En considérant un correcteur haut niveau basé sur un retour d'état statique de la forme :

$$u = Kx \qquad (\text{équation } 16)$$

où le vecteur K est exprimé par :

$$K = \begin{bmatrix} k_\beta & k_r & k_\psi & k_y & k_{\int y} & k_{\dot\delta} & k_\delta \end{bmatrix} \qquad (\text{équation } 17)$$

La représentation d'état, qui est exprimée par l'équation 3, est alors réécrite comme suit :

$$\dot{x} = (A + B_u K)x \qquad (\text{équation } 18)$$

Le but principal du dispositif LKA étant d'assurer la sécurité du véhicule, un ensemble ellipsoïdal $\varepsilon$ représentant l'ensemble des états atteignables du système en boucle fermée est choisi de sorte que le véhicule reste à l'intérieur de la voie de circulation une fois la correction LKA activée.

On associe l'ensemble ellipsoïdal $\varepsilon$ à la fonction quadratique :

$$V(x) = x^T P x \,; P = P^T > 0 \qquad \text{(équation 19)}$$

On exprime finalement cet ensemble $\varepsilon$ borné comme suit :

$$\varepsilon = \{x \in \mathbb{R}^n : x^T P x < 1\} \qquad \text{(équation 20)}$$

Lors de l'activation du dispositif d'assistance LKA, l'ensemble des conditions initiales des états du système est inclus dans un polytope $I_0$, avec comme coins $I_{0i}$ tel que $_i = 1{:}N_{I_0}$. Ce polytope doit être inclus dans l'ellipsoïdal $\varepsilon$ afin de garantir le maintien des états du système à l'intérieur de $\varepsilon$.

On peut écrire alors :

$$I_0 \subset \varepsilon \qquad \text{(équation 21)}$$

Cette contrainte est représentée par l'équation suivante :

$$\begin{bmatrix} 1 & I_{0i} \\ * & Q \end{bmatrix} \succ 0 \ with \ i = 1 : N_{I_o} \qquad \text{(équation 22)}$$

avec

$$Q = P^{-1} \qquad \text{(équation 23)}$$

L'équation 22 garantit que les coins du polytope $I_0$ appartiennent à la courbe de niveau de la fonction quadratique V(x).

Soit $x_0$ un polyèdre contenant l'ensemble borné des états du système. Ce polyèdre est défini par :

$$\mathcal{X}_0 = \{x \in R^n : |H_{0i}x| \le h_{0i}, i = 1 : N_{\mathcal{X}_0}\} \qquad \text{(équation 24)}$$

Cette contrainte garantit le maintien du véhicule à l'intérieur de la voie une fois le dispositif d'assistance LKA activé.

Comme $\varepsilon$ contient l'ensemble des états atteignables du système en boucle fermée, le polyèdre $x_0$ doit inclure l'ellipsoïdal $\varepsilon$. Cette condition se traduit par l'inégalité suivante :

$$\begin{bmatrix} P & * \\ H_{0i} & h_{0i}^2 \end{bmatrix} \ge 0, i = 1, \dots, N_{x_1} \qquad \text{(équation 25)}$$

On définit $x_1$ un polyèdre contenant l'ensemble des états du système ayant des dérivées bornées. Ce polyèdre est défini par :

$$\mathcal{X}_1 = \{x \in R^n : |H_{1i}(A + BK)x| \le h_{1i}, i = 1 : N_{\mathcal{X}_2}\} \qquad \text{(équation 26)}$$

Cette contrainte garantit que la vitesse latérale du véhicule $\dot{y}_L$ ainsi que l'accélération latérale $\ddot{y}_L$ et la dérivée du lacet $\dot{r}$ seront bornées pendant la correction LKA.

Le polyèdre $x_1$ contient l'ensemble ellipsoïdal $\varepsilon$ qui représente l'ensemble des états atteignables du système en boucle fermée. Ceci se traduit par l'inégalité suivante :

$$\begin{bmatrix} P & * \\ H_{1i}(A+BK) & h_{1i}^2 \end{bmatrix} \geq 0, i = 1,...,N_{x_2} \qquad (\text{équation } 27)$$

Afin de garantir une correction LKA suffisamment confortable pour le conducteur, une contrainte sur le choix des pôles utilisés pour générer les gains de la boucle fermée du correcteur LKA est introduite.

La figure 2 montre une région utilisée pour le placement des pôles de la loi de commande.

Cette contrainte est formulée à l'aide des 3 inégalités suivantes :

$$AQ + BR + (AQ + BR)^T + 2aQ \prec 0; R = KP^{-1} \qquad (\text{équation } 28)$$

qui garantit que les pôles seront situés à gauche de la droite perpendiculaire à l'abscisse et passant par -$\alpha$ ;

$$\begin{bmatrix} -rQ & AQ+BR \\ * & -rQ \end{bmatrix} \prec 0 \qquad (\text{équation } 29)$$

qui garantit que les pôles seront situés à l'intérieur du demi-cercle de centre O (l'origine des axes des abscisses et des ordonnées) et de rayon r, et se situant à gauche la droite perpendiculaire à l'abscisse et passant par l'origine O ; et

$$\begin{bmatrix} \sin(\theta)(AQ + BR + (AQ + BR)^T) & \cos(\theta)(AQ + BR - (AQ + BR)^T) \\ * & \sin(\theta)(AQ + BR + (AQ + BR)^T) \end{bmatrix} \prec 0$$

$$(\text{équation } 30)$$

qui garantit que les pôles seront situés à l'intérieur de la cône de centre O et de rayon r et d'angle d'ouverture $\theta$, et se situant à gauche la droite perpendiculaire à l'abscisse et passant par l'origine O.

Lorsque les équations 22, 23, 27, 28, 29 et 30 sont résolues par les moyens de calcul, on obtient la valeur de retour d'état statique $K$ à appliquer dans la loi de commande.

La figure 3 montre la trajectoire du véhicule obtenue suite à l'activation du dispositif d'aide à la conduite conforme à l'invention. Sur cette figure, $\Delta_{max}$ représente la valeur de déviation maximale autorisée de l'écart latéral entre l'axe du véhicule et le centre de la voie de circulation, et $\nabla_{max}$ représente la valeur du seuil de variation maximale de la vitesse latérale du véhicule garantissant un niveau acceptable de confort perçu par le conducteur.

Le calcul automatique des gains de correcteur permet de réduire le temps de conception de la loi de commande. Il repose sur des critères d'optimisation convexe sous contraintes LMI optimisés aisés à mettre en œuvre.

**Revendications**

1. Procédé d'aide à la conduite pour véhicule automobile, dans lequel on calcule un angle de braquage ($\delta_{ref}$) de roues directrices du véhicule de manière à maintenir le véhicule dans une voie de circulation, l'angle de braquage ($\delta_{ref}$) étant calculé à partir d'un modèle dynamique du véhicule et à partir de paramètres portant sur le comportement du véhicule et respectant des critères de sécurité et de confort du conducteur, **caractérisé en ce que** les critères de confort du conducteur comprennent un critère qui impose que la vitesse latérale du véhicule ($\dot{y}_L$) soit bornée par une valeur ($\nabla$max) garantissant un niveau acceptable de confort perçu par le conducteur, un second critère qui impose que l'accélération latérale ($\ddot{y}_L$) et la dérivée de la vitesse de lacet ($\dot{r}$) soient bornées, et un troisième critère qui impose que les vitesses minimale et maximale de convergence en boucle fermée soient bornées.

2. Procédé selon la revendication 1, dans lequel la détermination d'un angle de braquage est réalisée à partir de critères d'optimisation convexe sous contraintes LMI (Linear Matrix Inequalities).

3. Procédé selon l'une des revendications 1 et 2, dans lequel le modèle dynamique du véhicule comprend un modèle bicyclette, un modèle de direction assistée du véhicule, et l'intégrale de la position latérale ($\int y_L$).

4. Procédé selon l'une quelconque des revendications 1 à 3, dans lequel les critères de sécurité du conducteur comprennent un critère imposant qu'en régime permanent l'erreur de l'écart de la position latérale ($y_L$) entre le centre de gravité du véhicule et le centre de la voie converge vers une erreur latérale nulle, et un critère imposant que pour un ensemble de conditions initiales prédéfinies la valeur de cet écart est inférieure à une valeur fixe prédéfinie ($\Delta$max).

5. Dispositif d'aide à la conduite pour véhicule automobile, comprenant des moyens de détermination d'un angle de braquage ($\delta_{ref}$) de roues directrices du véhicule de manière à maintenir le véhicule dans une voie de circulation, dans lequel les moyens de déterminations comportent des moyens de calcul (Hi-Ctrl) d'angle de braquage à partir d'un modèle dynamique du véhicule et à partir de paramètres portant sur le comportement du véhicule et respectant des critères de sécurité et de confort du conducteur, **caractérisé en ce que** les critères de confort du conducteur comprennent un critère qui impose que la vitesse latérale du véhicule ($\dot{y}_L$) soit bornée par une valeur ($\nabla$max) garantissant un niveau acceptable de confort perçu par le conducteur, un second critère qui impose que l'accélération latérale ($\ddot{y}_L$) et la dérivée de la vitesse de lacet ($\dot{r}$) soient bornées, et un troisième critère qui impose que les vitesses minimale et maximale de convergence en boucle fermée sont bornées.

6. Dispositif selon la revendication 5, dans lequel les moyens de calcul d'angle de braquage ($\delta_{ref}$) des roues comportent un modèle dynamique du véhicule comprenant un modèle bicyclette, un modèle de la direction assistée du véhicule et l'intégrale de la position latérale ($\int y_L$) entre l'axe du véhicule et la tangente à la trajectoire de référence.

7. Dispositif selon l'une des revendications 5 et 6, dans lequel les critères de sécurité du conducteur comprennent un critère imposant qu'en régime permanent l'erreur de l'écart de la position latérale ($y_L$) entre le centre de gravité du véhicule et le centre de la voie converge vers une erreur latérale nulle, et un critère imposant que pour un ensemble de conditions initiales prédéfinies, la valeur de cet écart est inférieure à une valeur fixe prédéfinie ($\Delta$max).

8. Véhicule automobile comprenant un dispositif d'aide au maintien dans la voie selon l'une des revendications 5 à 7.


**Patentansprüche**

1. Assistenzverfahren zum Lenken eines Kraftfahrzeugs, bei dem ein Lenkwinkel ($\delta_{ref}$) der Lenkräder des Fahrzeugs berechnet wird, um das Fahrzeug auf einer Fahrspur zu halten, wobei der Lenkwinkel ($\delta_{ref}$) ausgehend von einem dynamischen Modell des Fahrzeugs und ausgehend von Parametern berechnet wird, die sich auf das Verhalten des Fahrzeugs beziehen und die Sicherheits- und Komfortkriterien des Fahrers erfüllen, **dadurch gekennzeichnet, dass** die Komfortkriterien des Fahrers ein Kriterium aufweisen, das erfordert, dass die Quergeschwindigkeit des Fahrzeugs ($\dot{y}_L$ durch einen Wert ($\nabla$max) begrenzt wird, der ein akzeptables Maß an dem vom Fahrer wahrgenommenen Komfort garantiert, und ein zweites Kriterium, das erfordert, dass die Querbeschleunigung ($\ddot{y}_L$) und die Ableitung der Gierrate ($\ddot{r}$) begrenzt sind, und ein drittes Kriterium, das erfordert, dass die minimale und die maximale Konvergenzgeschwindigkeit im geschlossenen Regelkreis begrenzt sind.

2. Verfahren nach Anspruch 1, bei dem die Bestimmung eines Lenkwinkels auf der Basis konvexer Optimierungskriterien unter LMI-Bedingungen (Linear Matrix Inequalities) durchgeführt wird.

3. Verfahren nach einem der Ansprüche 1 und 2, bei dem das dynamische Modell des Fahrzeugs ein Fahrradmodell, ein Servolenkungsmodell des Fahrzeugs und das Integral der seitlichen Position ($\int y_L$) aufweist.

4. Verfahren nach einem der Ansprüche 1 bis 3, bei dem die Fahrersicherheitskriterien ein Kriterium aufweisen, das erfordert, dass im stationären Zustand der Fehler der Abweichung der seitlichen Position ($y_L$) zwischen dem Schwerpunkt des Fahrzeugs und der Mitte der Fahrspur gegen einen seitlichen Fehler Null konvergiert, und ein Kriterium, das erfordert, dass für einen Satz vordefinierter Anfangsbedingungen der Wert dieser Abweichung kleiner als ein vordefinierter fester Wert($\Delta$max) ist.

5. Assistenzvorrichtung zum Lenken eines Kraftfahrzeugs, die die Mittel zum Bestimmen eines Lenkwinkels ($\delta_{ref}$) der Lenkräder des Fahrzeugs aufweist, um das Fahrzeug auf einer Fahrspur zu halten, wobei die Mittel zum Bestimmen des Lenkwinkels Berechnungsmittel (Hi-Ctrl) des Lenkwinkels ausgehend von einem dynamischen Modell des Fahrzeugs und ausgehend von Parametern aufweisen, die sich auf das Verhalten des Fahrzeugs beziehen und die Sicherheits- und Komfortkriterien des Fahrers erfüllen, **dadurch gekennzeichnet, dass** die Komfortkriterien des Fahrers ein Kriterium aufweisen, das erfordert, dass die Quergeschwindigkeit des Fahrzeugs ($\dot{y}_L$ durch einen Wert ($\nabla$max) begrenzt wird, der ein akzeptables Maß an dem vom Fahrer wahrgenommenen Komfort garantiert, und ein zweites Kriterium, das erfordert, dass die Querbeschleunigung ($\ddot{y}_L$) und die Ableitung der Gierrate ($\dot{r}$) begrenzt sind, und ein drittes Kriterium, das erfordert, dass die minimale und die maximale Konvergenzgeschwindigkeit im geschlossenen Regelkreis begrenzt sind.

6. Vorrichtung nach Anspruch 5, bei der die Mittel zum Berechnen des Lenkwinkels ($\delta_{ref}$) der Räder ein dynamisches Modell des Fahrzeugs aufweisen, ein Fahrradmodell, ein Servolenkungsmodell des Fahrzeugs und das Integral der seitlichen Position ($\int y_L$) zwischen der Fahrzeugachse und der Tangente an dem Referenzweg aufweist.

7. Vorrichtung nach einem der Ansprüche 5 und 6, bei der die Fahrersicherheitskriterien ein Kriterium aufweisen, das erfordert, dass im stationären Zustand der Fehler der Abweichung der seitlichen Position ($y_L$) zwischen dem Schwerpunkt des Fahrzeugs und der Mitte der Fahrspur gegen einen seitlichen Fehler Null konvergiert, und ein Kriterium, das erfordert, dass für einen Satz vordefinierter Anfangsbedingungen der Wert dieser Abweichung kleiner als ein vordefinierter fester Wert ($\Delta$max) ist.

8. Kraftfahrzeug, das eine Spurhalteassistenzvorrichtung nach einem der Ansprüche 5 bis 7 aufweist.

**Claims**

1. Driving assistance method for a motor vehicle, in which a steering angle ($\delta_{ref}$) of the steered wheels of the vehicle is calculated so as to keep the vehicle within a traffic lane, the steering angle ($\delta_{ref}$) being calculated on the basis of a dynamic model of the vehicle and on the basis of parameters relating to the behaviour of the vehicle and meeting safety and comfort criteria of the driver, **characterized in that** the comfort criteria of the driver comprise a criterion which imposes that the lateral speed of the vehicle ($\dot{y}_L$) is bounded by a value ($\nabla$max) ensuring an acceptable comfort level perceived by the driver, a second criterion which imposes that the lateral acceleration ($\ddot{y}_L$) and the derivative of the yaw speed ($\dot{r}$) are bounded, and a third criterion which imposes that the minimum and maximum closed-loop convergence speeds are bounded.

2. Method according to Claim 1, in which the steering angle is determined on the basis of convex optimization criteria under linear matrix inequality (LMI) constraints.

3. Method according to either of Claims 1 and 2, in which the dynamic model of the vehicle comprises a bicycle model, an assisted steering model of the vehicle, and the integral of the lateral position $\int y_L$).

4. Method according to any one of Claims 1 to 3, in which the safety criteria of the driver comprise a criterion imposing that, in a steady state, the error of the deviation of the lateral position ($y_L$) between the centre of gravity of the vehicle and the centre of the lane converges towards a zero lateral error, and a criterion imposing that, for a set of predefined initial conditions, the value of this deviation is less than a predefined fixed value ($\Delta$max).

5. Driving assistance device for a motor vehicle, comprising means for determining a steering angle ($\delta_{ref}$) of steered wheels of the vehicle so as to keep the vehicle within a traffic lane, in which the determination means comprise means (Hi-Ctrl) for calculating the steering angle on the basis of a dynamic model of the vehicle and on the basis of parameters relating to the behaviour of the vehicle and meeting safety and comfort criteria of the driver, **characterized in that** the comfort criteria of the driver comprise a criterion which imposes that the lateral speed of the vehicle ($\dot{y}_L$) is bounded by a value (Vmax) ensuring an acceptable comfort level perceived by the driver, a second criterion which imposes that the lateral acceleration ($\ddot{y}_L$) and the derivative of the yaw speed ($\dot{r}$) are bounded, and a third criterion which imposes that the minimum and maximum closed-loop convergence speeds are bounded.

6. Device according to Claim 5, in which the means for calculating the steering angle ($\delta_{ref}$) of the wheels comprise a dynamic model of the vehicle comprising a bicycle model, a model of the assisted steering of the vehicle and the integral of the lateral position ($\int y_L$) between the axis of the vehicle and the tangent to the reference trajectory.

7. Device according to either of Claims 5 and 6, in which the safety criteria of the driver comprise a criterion imposing that, in steady state, the error of the deviation of the lateral position ($y_L$) between the centre of gravity of the vehicle and the centre of the lane converges towards a zero lateral error, and a criterion imposing that, for a set of predefined initial conditions, the value of this deviation is less than a predefined fixed value ($\Delta$max).

8. Motor vehicle comprising a lane-keeping assistance device according to one of Claims 5 to 7.

# FIG.1

Boucle externe

$$\beta, r, \psi_L, Y_L, \int Y_L, \dot{\delta}, \delta$$

I

Hi-Ctrl $\quad \delta_{ref} \quad$ Lo-Ctrl

II

# FIG.2

Rayon = r

Imaginaire

O    Réel

$-r$    $-\alpha$    $\theta$

# FIG.3

Axe du véhicule

$Y_{L\_max}$

$\Delta_{max}$

Activation du dispositif d'aide à la conduite

$\nabla_{max}$

$Y_L$

Centre de la voie

## RÉFÉRENCES CITÉES DANS LA DESCRIPTION

**Documents brevets cités dans la description**

- EP 1726513 A
- US 6493619 B
- US 20110015805 A
- US 20160059856 A
- US 5979581 A